# EUROPÄISCHE PATENTSCHRIFT

(11) **EP 0 386 316 B1**
(45) Veröffentlichungstag und Bekanntmachung des Hinweises auf die Patenterteilung: **29.12.1993**
(21) Anmeldenummer: 89119040.7
(22) Anmeldetag: 13.10.1989
(51) Int. Cl.: B44B 5/02

(54) **Verfahren zur Herstellung einer Matrizenhülse und Vorrichtung zur Durchführung des Verfahrens**
Method for the production of a sleeve-like matrice and device to carry out the method
Procédé pour l'obtention d'une matrice sous forme de manchon et dispositif pour la réalisation du procédé

(30) Priorität: 07.03.1989 CH 840/89
(43) Veröffentlichungstag der Anmeldung: 12.09.1990
(73) Patentinhaber: Landis & Gyr Business Support AG, 6301 Zug (CH)
(72) Erfinder: Nyfeler, Alex, CH-6340 Baar (CH)
(74) Vertreter: Müller, Hans-Jürgen, Dipl.-Ing.

(56) Entgegenhaltungen:
- EP-A- 0 009 360
- EP-A- 0 043 623
- EP-A- 0 207 318
- EP-A- 0 222 033
- GB-A- 449 855
- US-A- 3 146 709
- US-A- 3 978 254
- US-A- 4 116 594

## Beschreibung

Die Erfindung bezieht sich auf ein Verfahren der im Oberbegriff des Patentanspruchs 1 genannten Gattung sowie auf eine Vorrichtung zur Durchführung dieses Verfahrens. Das Prägen feiner Strukturen in thermoplastischem Material ist vor allem zum Verbessern der Fälschungssicherheit von Dokumenten, beispielsweise Scheck- und Kreditkarten, Ausweisen und Wertpapieren, wichtig. Auf diesen Dokumenten werden feine, beispielsweise beugungsoptisch wirksame Strukturen erzeugt.

Aus der EP-A2-207 318 ist eine Prägewalze bekannt, die aus einem beheizbaren Walzenkern und einem von diesem lösbaren Walzenmantel besteht. Durch unterschiedliche Wärmeausdehnung von Walzenkern und Walzenmantel wird erreicht, daß beim Aufheizen der Walze der Walzenmantel festsitzt.

Aus der US-A 3 146 709 ist eine Methode zum Aufspannen eines Walzenmantels auf einen Walzenkern bekannt, bei der der Walzenmantel zur Montage auf den Walzenkern mittels Druckluft aufgeweitet wird.

Bekannt ist weiter (DE-A 35 27 412) eine Vorrichtung, mit der beugungsoptische wirksame Strukturen erzeugt werden, indem eine auf der Oberfläche einer Walze angebrachte räumliche Struktur durch Prägen in eine Lackschicht übertragen wird. Die Walze ist dabei gekühlt, um die durch das Aushärten der Lackschicht unter Einwirkung von Ultraviolettstrahlen entstehende Reaktionswärme abzuführen.

Es ist auch bekannt (CH-PS 661 804), solche Strukturen in thermoplastische Informationsträger dadurch einzuprägen, daß eine endlose, die Reliefmuster tragende Prägematrize gemeinsam mit dem Informationsträger zwischen zwei Kalanderwalzen hindurchgeführt wird, wobei die Prägematrize durch den Informationsträger hindurch mit Wirbelstrom geheizt wird.

Es hat sich gezeigt, daß die äußerst fein strukturierten Prägematrizen relativ schnell verschmutzen und infolge der Verschmutzung dann auch relativ schnell verschleißen. Deshalb können die bekannten Vorrichtungen für die Massenproduktion solcher Informationsträger nicht befriedigen.

Weiterhin ist es bekannt (EP-OS 43 623), eine dünnwandige Hülse für eine Druckmaschine so auszubilden, daß auf ihrer äußeren Oberfläche ein Photopolymer aufgebracht ist, in dem ein das Druckmuster darstellende Relief erzeugt wird. Die Hülse hat gegenüber der Druckwalze ein Untermaß. Durch Anwendung von Druckluft wird die Hülse zum Aufschieben auf die Druckwalze aufgeweitet.

Die genannte Aufgabe wird erfindungsgemäß durch die Merkmale des Anspruchs 1 gelöst. Vorteilhafte Ausgestaltungen ergeben sich aus den Unteransprüchen.

Nachfolgend wird ein Ausführungsbeispiel der Erfindung anhand der Zeichnung näher erläutert.

Es zeigen:
- Fig. 1: ein Schnittbild einer Prägewalze,
- Fig. 2: den Aufbau einer Matrizenhülse und
- Fig. 3: eine Vorrichtung zur Herstellung einer Matrizenhülse.

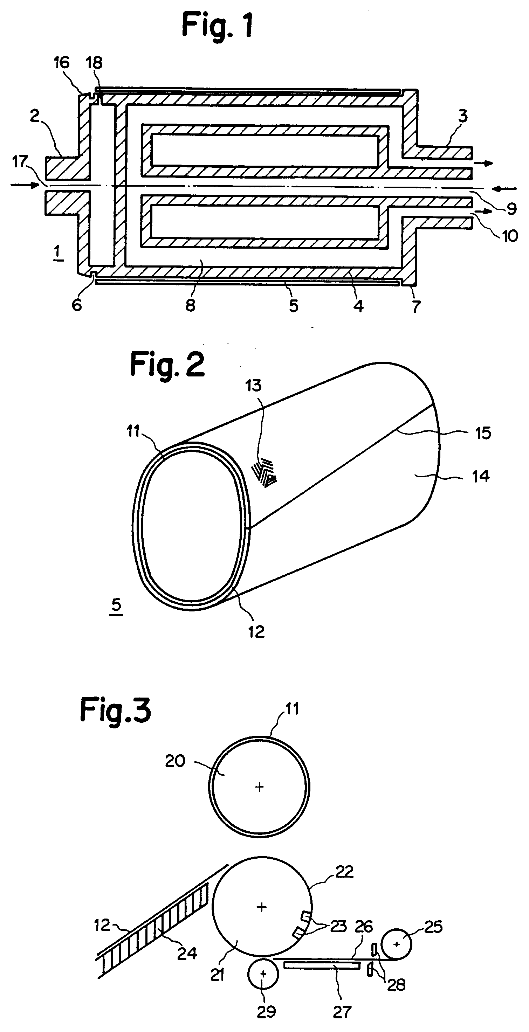

In der Fig. 1 bedeutet 1 eine Prägewalze. Die Prägewalze 1 weist an ihrem vorderen Ende einen Lagerzapfen 2 und an ihrem hinteren Ende einen Lagerzapfen 3 auf. Mittels dieser beiden Lagerzapfen 2, 3 kann die Prägewalze 1 in einer nicht dargestellten Prägemaschine drehbar gelagert werden. Die Prägewalze 1 besitzt einen Mantel 4, auf den eine Matrizenhülse 5 aufgeschoben werden kann. An ihrem vorderen Ende besitzt die Prägewalze 1 eine Nut 6 und an ihrem hinteren Ende eine Schulter 7. Die Matrizenhülse 5 wird beim Aufschieben auf den Mantel 4 bis gegen die Schulter 7 gedrückt und danach durch Einsetzen eines nicht dargestellten Sicherungsrings, beispielsweise eines Sprengrings, in die Nut 6 gegen laterale Verschiebung gesichert.

Die Prägewalze 1 weist einen ersten Hohlraum 8 auf, in dem sich ein Fluid befindet. Dieses Fluid dient dazu, die Prägewalze 1 und mit ihr die Matrizenhülse 5 zu temperieren. Dazu ist der Hohlraum 8 über eine Einlaßöffnung 9 und eine Auslaßöffnung 10

Der Erfindung liegt die Aufgabe zugrunde, ein Verfahren der eingangs genannten Gattung sowie eine Vorrichtung hierfür dahingehend zu verbessern, daß eine hohe Genauigkeit bezüglich der Lage von bei Dokumenten als Sicherheitsmerkmale dienenden Prägestrukturen erreicht wird und gleichzeitig wirtschaftlich gearbeitet wird. mit einer nicht dargestellten Temperiereinrichtung verbunden. Das Fluid zirkuliert zwischen der Temperiereinrichtung und dem Hohlraum 8. Die Temperiereinrichtung enthält eine Umwälzpumpe zur zwangsweisen Umwälzung des Fluids, eine Heizeinrichtung zur Aufheizung des Fluids und eine Temperaturregelvorrichtung, mit der das Fluid auf einer bestimmten, einstellbaren Temperatur gehalten wird.

Die Heizeinrichtung samt der Temperaturregelvorrichtung kann auch in die Prägewalze 1 integriert sein und direkt im Hohlraum 8 angeordnet sein. Die Verwendung eines Fluids ist dann entbehrlich und die Heizeinrichtung kann die Prägewalze 1 direkt heizen. Mittels der zuvor beschriebenen Anordnung mit separater Temperiereinrichtung unter Verwendung eines durch den Hohlraum 8 zirkulierenden Fluids läßt sich jedoch in vorteilhafter Weise eine wesentlich bessere Genauigkeit der Temperaturregelung erreichen als mit einer Direktbeheizung durch Heizwendel oder mittels induktiv wirkender Einrichtungen.

Die Fig. 2 zeigt den Aufbau einer Matrizenhülse 5. Diese besteht aus einer Kernhülse 11, auf deren Mantelfläche eine Matrize 12 befestigt ist. Die Matrize 12 wird bevorzugt zunächst als ebene Fläche hergestellt, die auf einer Seite das Negativ der zu prägenden feinen Strukturen trägt, wobei mit feiner Struktur beispielsweise eine beugungsoptisch wirksame Struktur gemeint ist. Eine solche Struktur ist mit der Bezugszahl 13 angedeutet. Nach der Herstellung der Matrize 12 wird diese auf die Kernhülse 11 so aufgezogen, daß die Seite mit dem Negativ der zu prägenden Struktur die Mantelfläche 14 der Matrizenhülse 5 bildet. Die Befestigung der Matrize 12 auf der Kernhülse 11 kann durch Löten, Schweißen, Punktschweißen oder Kleben erfolgen.

Beim Umwickeln der Kernhülse 11 mit der zuvor ebenen Matrize 12 entsteht eine Stoßkante 15. Hat die Matrize 12 rechteckige Gestalt, so liegt die Stoßkante parallel zur Achse der Kernhülse. Da dies beim späteren Prägen eine Schwachstelle bildet, ist es vorteilhaft, die Matrize 12 als Parallelogramm auszubilden. Dadurch wird erreicht, daß die Stoßkante 15 keine Mantellinie ist, sondern schräg über die Mantelfläche verläuft.

Der Innendurchmesser der Matrizenhülse 5 ist geringfügig kleiner als der Außendurchmesser des Mantels 4 der Prägewalze 1. Als Beispiel für die Toleranz sei angegeben, daß das Untermaß etwa 0,05 bis 0,1 mm beträgt bei einem Durchmesser von 200 mm.

Um eine Matrizenhülse 5 problemlos auf die Prägewalze 1 aufschieben zu können, besitzt die Prägewalze 1 an ihrem vorderen Ende eine Anschrägung 16 (Fig. 1). Beim Aufschieben wird die Matrizenhülse 5 durch diese Anschrägung 16 etwas aufgeweitet. Am vorderen Ende der Prägewalze befindet sich ein Anschluß 17, der mit einer nicht dargestellten Druckluftquelle verbunden ist. Im vorderseitigen Bereich des Mantels 4 befinden sich Düsen 18, die mit dem Anschluß 17 in Verbindung stehen. Die am Anschluß 17 eingespeiste Druckluft kann durch diese Düsen 18 entweichen. Mehrere solcher Düsen 18 sind am Umfang des Mantels 4 angebracht.

Wird die Matrizenhülse 5 auf die Prägewalze 1 aufgeschoben, so wird zunächst das Ende der Matrizenhülse 5 durch die Anschrägung 16 wie beschrieben etwas aufgeweitet. Beim weiteren Aufschieben der Matrizenhülse 5 überdeckt die Matrizenhülse 5 die Düsen 18. Unter der Kraftwirkung der Preßluft wird nun die Matrizenhülse 5 aufgeweitet und beim weiteren Aufschieben entsteht zwischen dem Mantel 4 und der Innenfläche der Matrizenhülse 5 ein Luftpolster. Damit wird erreicht, daß sich die Matrizenhülse 5 sehr leicht über den Mantel 4 schieben läßt.

Ist die Matrizenhülse 5 bis gegen die Schulter 7 gedrückt worden, so wird die Druckluftzufuhr unterbrochen, was zur Folge hat, daß nach dem Entweichen des Luftpolsters zwischen Mantel 4 und Matrizenhülse 5 die Matrizenhülse 5 fest auf der zylindrischen Fläche des Mantels 4 sitzt. Um ein laterales Verschieben der Matrizenhülse 5 unter der Druckbeanspruchung beim Prägen zu verhindern, wird ein nicht dargestellter Sprengring in die Nut 6 eingesetzt, so daß die Matrizenhülse 5 zwischen diesem Sprengring und der Schulter 7 gehalten ist.

Vorteilhaft ist dies im Hinblick auf die fallweise nötige Einhaltung sehr kleiner Toleranzen hinsichtlich der Lage der geprägten Strukturen. Gegenüber anderen Möglichkeiten zur Fixierung der Position der Matrizenhülse 5 auf der Prägewalze 1 bietet die beschriebene Lösung mit Schulter 7, Nut 6 und Sprengring den Vorteil, daß sie kostengünstig herstellbar ist. Aufwendigere Lösungen, die dann die Möglichkeit zur Automatisierung bieten, können aber durchaus zweckmäßig sein.

Vorteilhaft ist es, wenn die thermischen Ausdehnungskoeffizienten des Materials der Prägewalze 1 und des Materials der Matrizenhülse 5 annähernd gleich groß sind. Dadurch wird erreicht, daß der Sitz der Matrizenhülse 5 auf der Prägewalze 1 unabhängig von der Temperatur gleichmäßig gewährleistet ist und daß sowohl die Gefahr der plastischen Verformung der Matrizenhülse 5 durch Überschreiten der Streckgrenze ihres Materials als auch das Lockerwerden der Matrizenhülse 5 auf der Prägewalze 1 ausgeschlossen werden kann.

Gegenüber der bekannten Lösung mit einem zwischen zwei Kalanderwalzen hindurchlaufenden Matrizenband bietet die erfindungsgemäße Vorrichtung den Vorteil, daß die Matrize immer auf gleichbleibender Temperatur gehalten wird und somit höhere Produktionsgeschwindigkeiten erreichbar sind. Die Matrizenhülse 5 besteht aus thermisch gut leitendem Material. Durch die gute Wärmeleitfähigkeit des Materials der Matrizenhülse 5 wird erreicht, daß Wärmeverluste der Matrizenhülse 5 infolge der Abgabe von Wärme an das zu prägende Material rasch ersetzt werden.

Für den Erfindungsgegenstand ist charakteristisch, daß die Matrizenhülse 5 sehr leicht ausgewechselt werden kann. Infolge Verschmutzung während des Produktionsprozesses ist es erforderlich, die Matrizenhülse 5 häufig zu reinigen. Infolge der leichten Auswechselbarkeit der Matrizenhülse 5 kann diese zu Reinigungszwecken von der Prägewalze 1 abgezogen werden. Zweckmäßigerweise arbeitet man zur Erreichung einer möglichst hohen Produktionskapazität mit zwei gleichartigen Matrizenhülsen 5, von denen die eine sich jeweils in der Produktionsmaschine befindet, während die zweite in einer anderen Vorrichtung gereinigt wird. Die Stillstandszeiten der Prägevorrichtung lassen sich so minimieren.

An die Genauigkeit der Positionierung der als Echtheitsmerkmale dienenden Strukturen bei den mittels der zuvor beschriebenen Vorrichtung erzeugten Dokumenten werden oftmals sehr hohe Anforderungen gestellt. Deshalb ist es erforderlich, bei der Herstellung der Matrizenhülse 5 aus deren Einzelteilen größte Sorgfalt walten zu lassen. Eine vorteilhafte Ausgestaltung des Erfindungsgegenstandes besteht deshalb im nachfolgend geschilderten Verfahren zur Herstellung der Matrizenhülse 5 und in einer Vorrichtung zur Durchführung dieses Verfahrens.

Wie zuvor geschildert, wird die Matrizenhühlse 5 aus der Kernhülse 11 und der Matrize 12 zusammengefügt. Die nach der Herstellung plane Matrize 12 muß dabei so präzis um die Mantelfläche der Kernhülse 11 gewickelt werden, daß möglichst kein seitlicher Versatz auftritt. Oftmals darf dieser seitliche Versatz nicht größer als ± 0,1 mm sein.

Das Verfahren zur Herstellung der Matrizenhülse 5 umfaßt das präzise Ausrichten der Matrize 12 mittels eines magnetischen Montagezylinders, das anschließende Beschichten der Rückseite der Matrize 12 mit einer Klebschicht und den Transfer der beschichteten Matrize 12 auf die Kernhülse 11. Zur Verdeutlichung des Verfahrens sei zunächst anhand der Fig. 3 der Aufbau einer Vorrichtung zur Durchführung des Verfahrens geschildert.

Auf einem Zylinder 20 ist die Kernhülse 11 aufgespannt. Dabei weist der Zylinder 20 die gleichen Einrichtungen zum Aufschieben und Fixieren der Kernhülse 11 auf wie die Prägewalze 1. Auch der Zylinder 20 hat also einen Durchmesser, der etwas größer ist als der Innendurchmesser der Kernhülse 11, und weist die zum Aufschieben und Fixieren der Kernhülse 11 nötigen Einzelheiten wie Anschrägung, Druckluftanschluß und Düsen auf.

Der Achse des Zylinders 20 parallel ist ein Montagezylinder 21 angeordnet, in dessen Oberfläche 22 Magnete 23 eingelassen sind. Der Oberfläche 22 wird die plane Matrize 12 auf einer Auflage 24 tangential zugeführt und zwar so, daß die die Prägestruktur tragende Seite der Matrize 12 der Oberfläche 22 des Montagezylinders 21 zugewandt ist. Durch die Kraft der Magnete 23 wird die Matrize 12 gegen die Oberfläche 22 gezogen. Wird nun der Montagezylinder 21 in Rotation versetzt - in der Anordnung der Fig. 3 im Uhrzeigersinn - so ist die Matrize 12 nach einer vollen Drehung des Montagezylinders 21 auf der Oberfläche 22 aufgewickelt.

Die Matrize 12 wird nun genau positioniert. Um dies zu erleichtern, kann es zweckmäßig sein, zwischen die Oberfläche 22 und die Matrize 12 eine Folie passender Dicke zu legen, weil dadurch die wirksame Kraft der Magnete 23 verringert wird.

Um die Handhabung zu erleichtern, kann es auch zweckmäßig sein, als Magnete 23 Elektromagnete zu verwenden. Da deren Erregung variiert werden kann, ist es möglich, durch Verringerung der Erregung die Matrize 12 auf der Oberfläche 22 relativ leicht zu verschieben. Dadurch kann die Matrize 12 genau positioniert werden, so daß ihre Enden versatzfrei aneinanderstoßen. Ist die genaue Position erreicht, wird die Erregung der Magnete 23 erhöht, so daß nun die Matrize 12 unverrückbar festsitzt.

Nach dieser Positionierung der Matrize 12 auf dem Montagezylinder 21 ist es möglich, die rückseitige Oberfläche der Matrize 12 zu reinigen, um sie für das Aufbringen einer Transferklebschicht optimal vorzubereiten.

Nach abgeschlossener Reinigung kann von einer Klebbandrolle 25 Transferklebband 26 zugeführt werden. Der präzisen Zuführung dient eine Führungsbahn 27. Mit Hilfe einer Schneidvorrichtung 28 kann das Transferklebband 26 abgelängt werden.

Dem Montagezylinder 21 gegenüber ist eine Gegendruckrolle 29 angeordnet. Sobald der Anfang des Transferklebbandes 26 zwischen Montagezylinder 21 und Gegendruckrolle 29 vorgeschoben worden ist, wird die Gegendruckrolle 29 gegen den Montagezylinder 21 bewegt, so daß das Transferklebband 26 an der um den Montagezylinder 21 gewickelten Matrize 12 haften kann. Anschließend führt der Montagezylinder 21 eine volle Umdrehung durch. Danach ist die Matrize 12 auf der ganzen Oberfläche mit dem Transferklebband 26 beschichtet. Die das Transferklebband 26 tragende Schutzfolie kann nun abgezogen werden.

Anschließend wird der Zylinder 20 gegen den Montagezylinder 21 bewegt. Da jetzt die Klebkraft des Transferklebbandes 26 größer ist als die magnetische Haftkraft, wird bei anschließender Drehung des Zylinders 20 oder des Montagezylinders 21 die Matrize 12 von der Oberfläche 22 des Montagezylinders 21 abgezogen und auf die Kernhülse 11 übertragen. Nach einer vollen Umdrehung der Zylinder ist die Matrize 12 auf der Mantelfläche der Kernhülse 11 aufgezogen und somit die Matrizenhülse 5 fertiggestellt. Sie kann nun vom Zylinder 20 unter Anwendung von Druckluft abgezogen werden und steht für den Einsatz in der Prägeeinrichtung zur Verfügung.

Mit dem beschriebenen Verfahren zur Herstellung von Matrizenhülsen 5 und der beschriebenen Einrichtung lassen sich in vorteilhafter Weise enge Toleranzen erreichen.

## Patentansprüche

1. Verfahren zur Herstellung einer Matrizenhülse (5) für eine Vorrichtung zum Prägen von feinen Strukturen in thermoplastisches Material, die aus einer heizbaren Prägewalze (1) und der damit formschlüssig verbundenen Matrizenhülse (5) besteht, wobei die Matrizenhülse (5) eine Prägematrize (12) aufweist, die auf ihrer Oberfläche ein negatives Abbild der zu prägenden Struktur trägt, gekennzeichnet durch folgende Verfahrensschritte:
- Aufziehen der Matrize (12) auf einen magnetischen Montagezylinder (21),
- Ausrichten der Matrize (12),
- Aufbringen einer Transferklebschicht auf die Rückseite der Matrize (12),
- Montage einer Kernhülse (11) auf einem Zylinder (20),
- Verschieben der Achse des Zylinders (20) oder des Montagezylinders (21) so, daß die Achsen der Zylinder (20, 21) parallel zueinander sind und sich die Mantelflächen der Zylinder (20, 21) berühren,
- Abrollen der Zylinder (20, 21) gegeneinander und
- Abnehmen der fertigen Matrizenhülse (5) vom Zylinder (20).

2. Vorrichtung zur Durchführung des Verfahrens nach Anspruch 1, dadurch gekennzeichnet, daß achsparallel zu einem zur Aufnahme der Kernhülse (11) bestimmten Zylinder (20) ein Montagezylinder (21) angeordnet ist, in dessen Oberfläche (22) Magnete (23) eingelassen sind, durch die die Matrize (12) auf der Oberfläche (22) fixiert werden kann, daß Zylinder (20) und Montagezylinder (21) so gegeneinander bewegbar sind, daß sich in der einen Endlage die Mantelflächen der Zylinder (20, 21) berühren, so daß mittels einer auf die Oberfläche der Matrize (12) aufgebrachten Klebschicht beim Rotieren des Zylinders (20) die Matrize (12) auf die Kernhülse (11) übertragen wird.

3. Vorrichtung nach Anspruch 2, dadurch gekennzeichnet, daß die Magnete (23) Elektromagnete sind.

## Claims

1. A method of producing a matrix sleeve (5) for an apparatus for embossing fine structures into thermoplastic material, which comprises a heatable embossing roller (1) and the matrix sleeve (5) which is positively lockingly connected thereto, wherein the matrix sleeve (5) has an embossing matrix (12) which on its surface carries a negative reproduction of the structure to be embossed,
characterised by the following method steps:
- pulling the matrix (12) on to a magnetic assembly cylinder (21),
- aligning the matrix (12),
- applying a transfer adhesive layer to the back of the matrix (12),
- fitting a core sleeve (11) on a cylinder (20),
- displacing the axis of the cylinder (20) or the assembly cylinder (21) in such a way that the axes of the cylinders (20, 21) are parallel to each other and the peripheral surfaces of the cylinders (20, 21) touch,
- rolling the cylinders (20, 21) against each other, and
- removing the finished matrix sleeve (5) from the cylinder (20).

2. Apparatus for carrying out the method according to claim 1 characterised in that an assembly cylinder (21) is arranged with its axis parallel to that of a cylinder (20) which is intended to receive the core sleeve (11), magnets (23) being let into the surface (22) of the assembly cylinder (21) for fixing the matrix (12) on the surface (22), and that the cylinder (20) and the assembly cylinder (21) are movable relative to each other in such a way that in the one limit position the peripheral surfaces of the cylinders (20, 21) touch each other so that the matrix (12) is transferred on to the core sleeve (11) upon rotation of the cylinder (20) by means of an adhesive layer applied to the surface of the matrix (12).

3. Apparatus according to claim 2 characterised in that the magnets (23) are electromagnets.

## Revendications

1. Procédé de fabrication d'une matrice en forme de manchon (5) pour un dispositif qui est destiné à empreindre de fines marques dans une matière thermoplastique et qui est constitué d'un rouleau à empreindre (1) qui peut être chauffé et de la matrice en forme de manchon (5) qui peut y être reliée à cela par une liaison par la forme, la matrice en forme de manchon (5) présentant une matrice à empreindre (12) qui porte sur sa surface une image négative de la marque à empreindre, caractérisé en ce qu'il comporte :
- une pose par traction de la matrice (12) sur un cylindre de montage magnétique (21),
- un alignement de la matrice (12),
- une application d'une couche adhésive de transfert sur la face arrière de la matrice (12),
- un montage d'un manchon interne (11) sur un cylindre (20),
- un déplacement de l'axe du cylindre (20) ou du cylindre de montage (21) de sorte que les axes des cylindres (20, 21) soient parallèles l'un à l'autre et que les surfaces d'enveloppe des cylindres (20, 21) se touchent,
- un déroulement des cylindres (20, 21) l'un contre l'autre et,
- un retrait, du cylindre (20), de la matrice en forme de manchon (5).

2. Dispositif pour la mise en oeuvre du procédé suivant la revendication 1, caractérisé en ce que parallèlement à l'axe d'un cylindre (20) destiné à recevoir le manchon interne (11) est agencé un cylindre de montage (21) dans la surface (22) duquel sont encastrés des aimants (23) par lesquels la matrice (12) peut être fixée sur la surface (22), en ce que cylindre (20) et cylindre de montage (21) sont agencés de façon mobile l'un par rapport à l'autre de sorte que dans une des positions extrêmes les surfaces d'enveloppe des cylindres (20, 21) se touchent de façon que la matrice (12) soit transférée sur le manchon interne (11), lors d'une rotation du cylindre (20), au moyen d'une couche adhésive appliquée sur la surface de la matrice (12).

3. Dispositif suivant la revendication 2, caractérisé en ce que les aimants (23) sont des électro-aimants.
